# DEMANDE DE BREVET EUROPEEN

(11) **EP 1 571 056 A1**
(43) Date de publication de la demande: **07.09.2005**
(21) Numéro de dépôt: 05290455.4
(22) Date de dépôt: 01.03.2005
(51) Int. Cl.: B60S 1/24

(54) **Dispositif d'actionnement d'essuie-vitres avant et véhicule équipé d'un tel dispositif**

(30) Priorité: 04.03.2004 FR 0402271
(71) Demandeur: Peugeot Citroen Automobiles S.A., 78140 Vélizy Villacoublay (FR)
(72) Inventeur: Robert, David, 95150 Taverny (FR)
(74) Mandataire: Thinat, Michel

(57) **Abrégé**

L'invention concerne un dispositif d'actionnement d'essuie-vitres avant conducteur et passager de véhicule automobile, ce dispositif comprenant un moteur (20), des axes de rotation conducteur et passager (31, 32), des manivelles conducteur et passager (41, 42) montées libres en rotation par les axes de rotation conducteur et passager (31, 32) et entraînant respectivement les essuie-vitres conducteur et passager en rotation, une manivelle moteur (50) entraînée en rotation par le moteur (20), et des bielles conducteur et passager (61, 62) montées pivotantes sur les manivelles conducteur et passager (41, 42) et sur la manivelle moteur (50).

Selon l'invention, les éléments du dispositif d'actionnement sont montés suivant une première configuration pour la version direction à gauche du véhicule, et suivant une seconde configuration pour la version direction à droite.

## Description

L'invention concerne en général les dispositifs d'actionnement d'essuie-vitres avant de véhicules automobiles et les véhicules équipés de tels dispositifs.

Plus précisément, l'invention concerne selon un premier aspect un dispositif d'actionnement d'essuie-vitres avant conducteur et passager de véhicule automobile, ce dispositif comprenant un élément de structure, un moteur solidaire de l'élément de structure entraînant en rotation un axe moteur, des axes de rotation conducteur et passager, des manivelles conducteur et passager montées libres en rotation relativement à l'élément de structure respectivement par les axes de rotation conducteur et passager et entraînant respectivement les essuie-vitres conducteur et passager en rotation autour des axes de rotation conducteur et passager, une manivelle moteur entraînée en rotation par l'axe moteur, et des bielles conducteur et passager montées pivotantes par des premières extrémités respectivement sur les manivelles conducteur et passager et par des secondes extrémités respectives opposées aux premières sur la manivelle moteur.

Des dispositifs de ce type sont connus de l'art antérieur et sont montés en série sur de nombreux véhicules automobiles.

Quand un même véhicule est destiné à être vendu dans des pays où la circulation se fait du côté droit de la chaussée, comme en Europe continentale, et dans des pays où la circulation se fait du côté gauche de la chaussée, comme au Royaume-Uni, la direction du véhicule peut être installée à droite ou à gauche suivant le lieu de vente du véhicule.

Les positions et les courses des essuie-vitres ne sont pas les mêmes dans les versions direction à gauche et direction à droite du véhicule. En conséquence, les versions direction à droite et direction à gauche d'un même véhicule sont équipées de dispositifs d'actionnement d'essuie-vitres différents.

La pratique courante est de développer les deux dispositifs séparément pour les deux versions, ce qui double pratiquement les coûts de conception et de développement. Ces deux dispositifs mettent en oeuvre des pièces différentes, ce qui complique la gestion des pièces détachées, et renchérit le coût de production du véhicule.

Dans ce contexte, la présente invention a pour but de pallier les défauts mentionnés ci-dessus et de proposer un dispositif unique qui peut être adapté facilement aux deux versions du véhicule.

A cette fin, le dispositif de l'invention, par ailleurs conforme à la définition générique qu'en donne le préambule ci-dessus, est essentiellement caractérisé en ce que les éléments du dispositif d'actionnement sont adaptés à un véhicule automobile prédéterminé dans lequel la direction est montée sélectivement à droite ou à gauche, ces éléments étant montés suivant une première configuration quand le dispositif est destiné à la version direction à gauche dudit véhicule, les mêmes éléments étant montés suivant une seconde configuration quand le dispositif est destiné à la version direction à droite dudit véhicule.

Dans un mode de réalisation possible de l'invention, les axes de rotation conducteur et passager sont coplanaires.

Avantageusement, le dispositif comprend une pièce de maintien solidaire de l'élément de structure et sur laquelle les axes de rotation conducteur et passager sont montés, cette pièce occupant une première position dans la première configuration déterminant les positions respectives des axes conducteur et passager relativement à l'élément de structure dans cette première configuration, la pièce occupant une seconde position dans la seconde configuration déterminant les positions respectives des axes conducteur et passager relativement à l'élément de structure dans cette seconde configuration.

En outre, la pièce de maintien présente une forme allongée suivant une direction générale longitudinale allant de l'axe conducteur à l'axe passager, cette pièce s'étendant dans le plan de symétrie défini par les axes conducteur et passager dans sa première position, et passant de sa première à sa deuxième position par rotation autour d'un axe transversal contenu dans le plan de symétrie et perpendiculaire à la direction longitudinale.

De préférence, la pièce de maintien comprend un tube de maintien s'étendant sensiblement longitudinalement, et des paliers conducteur et passager rigidement fixés à deux extrémités opposées du tube de maintien dans lesquels sont montés respectivement les axes de rotation conducteur et passager.

Par exemple, le tube de maintien comprend un tronçon de fixation apte à être rigidement fixé sur un même organe de fixation de l'élément de structure à la fois dans la première position et dans la deuxième position de l'organe de maintien.

De plus, la manivelle moteur présente une extrémité fixe solidaire de l'axe moteur et une extrémité pivot opposée à l'extrémité fixe sur laquelle sont montées les bielles conducteur et passager.

Avantageusement, le dispositif adopte, quand les essuie-vitres ne sont pas en fonctionnement, une position de repos dans laquelle les bielles conducteur et passager sont alignées.

Dans ce cas, la manivelle moteur adopte, dans la position de repos du dispositif, une position alignée avec les bielles conducteur et passager, la manivelle s'étendant à partir de l'axe moteur du côté du conducteur dans les première et seconde configurations.

Selon un second aspect, l'invention vise un véhicule automobile comprenant des essuie-vitres avant conducteur et passager et un dispositif d'actionnement de ces essuie-vitres présentant les caractéristiques décrites ci-dessus, la direction du véhicule étant montée sélectivement à droite ou à gauche, les éléments du dispositif d'actionnement étant montés suivant la première configuration et le dispositif étant disposé d'un côté gauche du véhicule dans la version direction à gauche du véhicule, les éléments du dispositif d'actionnement étant montés suivant la seconde configuration et le dispositif étant disposé d'un côté droit du véhicule dans la version direction à droite du véhicule.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue en perspective du pare-brise d'un véhicule automobile, de ses essuie-vitres conducteur et passager et du dispositif d'actionnement des essuie-vitres,
- la figure 2 est une vue de dessous du pare-brise et des axes conducteur et passager d'un dispositif d'actionnement selon l'art antérieur adapté à un véhicule en version conduite à gauche,
- la figure 3 est une vue de côté du pare-brise et des axes de la figure 2, les axes étant représentés avec une inclinaison amplifiée pour une bonne compréhension de la description,
- la figure 4 est une vue de dessus du pare-brise d'un véhicule, le dispositif d'actionnement de l'invention dans sa première configuration adaptée à la version conduite à gauche du véhicule étant représenté à droite du dessin, et le dispositif d'actionnement de l'invention dans sa seconde configuration adaptée à la version conduite à droite du véhicule étant représenté à gauche du dessin
- les figures 5 et 6 sont des vues agrandies respectivement des dispositifs d'actionnement en première et seconde configurations de la figure 4,
- les figures 7 et 8 sont des vues éclatées, en perspective, respectivement des dispositifs des figures 5 et 6, et
- les figures 9A à 9E montrent les opérations nécessaires pour convertir un dispositif d'actionnement de sa première configuration adaptée à la version conduite à gauche du véhicule à sa seconde configuration adaptée à la version conduite à droite du véhicule.

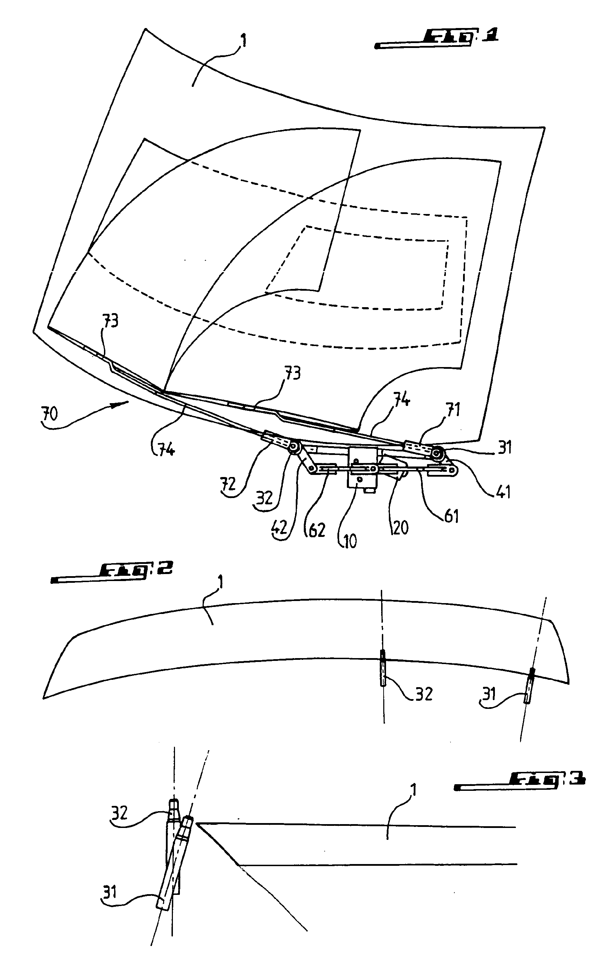

Le dispositif représenté sur la figure 1 est destiné à actionner les essuie-vitres avant conducteur et passager 70 d'un véhicule automobile.

Comme on le comprend en observant les figures 1, 7 et 8, ce dispositif comprend un élément de structure 10, un moteur 20 solidaire de l'élément de structure 10 entraînant en rotation un axe moteur 21, des axes de rotation conducteur et passager 31 et 32, des manivelles conducteur et passager 41 et 42 montées libres en rotation relativement à l'élément de structure 10 respectivement par les axes de rotation conducteur et passager 31 et 32 et entraînant respectivement les essuie-vitres conducteur et passager 70 en rotation autour des axes de rotation conducteur et passager 31 et 32, une manivelle moteur 50 entraînée en rotation par l'axe moteur 21, et des bielles conducteur et passager 61 et 62 montées pivotantes par des premières extrémités 611 et 621 respectivement sur les manivelles conducteur et passager 41 et 42 et par des secondes extrémités respectives 612 et 622 opposées aux premières sur la manivelle moteur 50.

L'élément de structure 10 est une platine en L, comprenant des première et seconde plaques 11 et 12 mutuellement perpendiculaires, définissant respectivement un plan vertical et un plan horizontal.

Le moteur 20 est fixé rigidement sous la seconde plaque 12, sur une face de cette seconde plaque tournée vers la première plaque 11. L'axe moteur 21 s'étend verticalement, traverse la seconde plaque 12 par un orifice pratiqué dans celle-ci, et fait saillie au-dessus de la seconde plaque 12.

Les essuie-vitres conducteur et passager 70 comprennent chacun un entraîneur, conducteur 71 ou passager 72 solidaire en rotation autour de l'axe de rotation conducteur ou passager de la manivelle conducteur 41 ou passager 42, un balai 73 portant une raclette appliquée sur le pare-brise 1, et une tige rigide 74 à une extrémité de laquelle le balai 73 est monté pivotant, une extrémité opposée de cette tige 74 étant liée à l'entraîneur 71 ou 72 par un dispositif à ressort connu en soi.

Le dispositif à ressort confère de la souplesse à l'essuie-vitre dans une direction radiale par rapport à l'axe de rotation conducteur ou passager.

Les caractéristiques des éléments du dispositif équipant un véhicule sont déterminées à la conception de ce véhicule en fonction de la forme du pare-brise.

Les critères à respecter sont les suivants :
1/ bonne application des raclettes en caoutchouc de l'essuie-vitre sur le pare-brise ;
2/ limitation du vrillage de la raclette pendant le balayage ;
3/ limitation de la sollicitation radiale appliquée par le balai sur le dispositif à ressort ;
4/ balayage effectif des zones du pare-brise 1 prescrites par les règlements.

Ces contraintes sont prises en compte lors de la conception du dispositif d'actionnement d'abord en choisissant l'orientation des axes de rotation conducteur et passager 31 et 32.

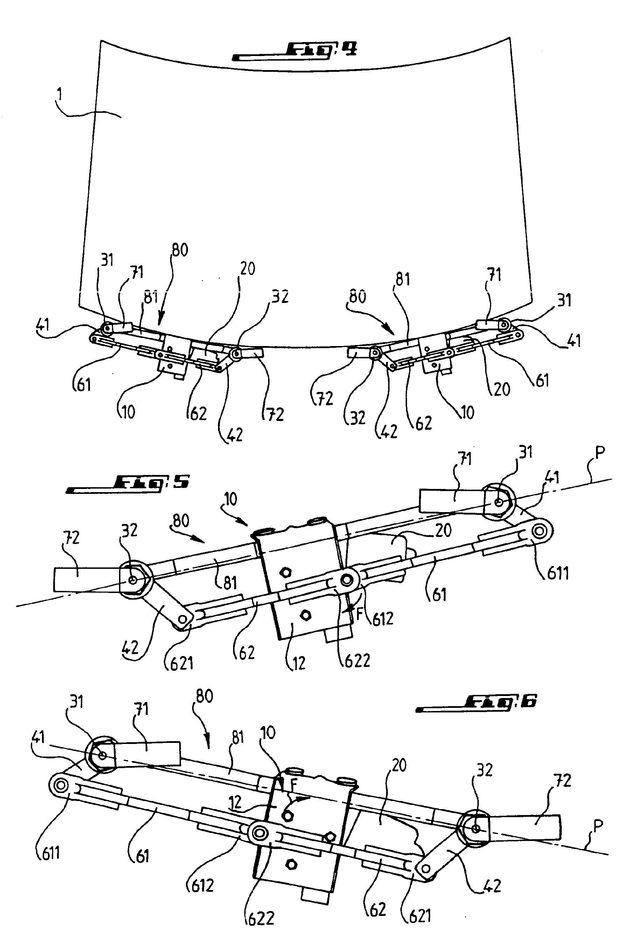

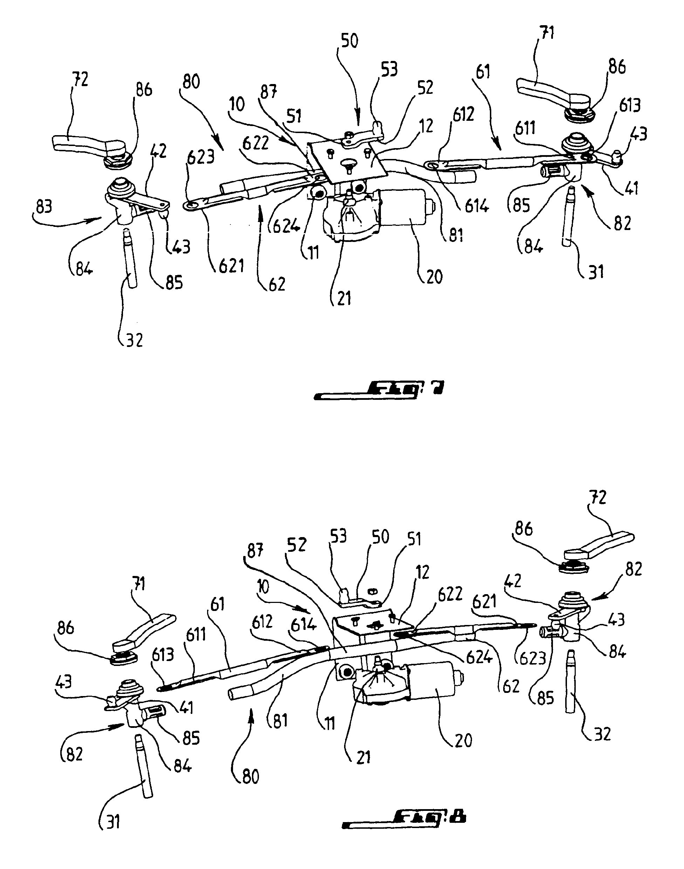

Dans les dispositifs selon l'art antérieur, les axes de rotation conducteur et passager 31 et 32 présentent des orientations différentes à la fois quand ils sont considérés de dessous comme sur la figure 2 et quand ils sont considérés de côté comme sur la figure 3. Ces axes ne sont pas coplanaires.

Une fois les orientations des axes déterminées, les caractéristiques précises des différents éléments du dispositif d'actionnement sont fixées. Ces caractéristiques sont la longueur des bielles conducteur et passager, des manivelles conducteur et passager, de la manivelle moteur, les positions relatives de l'axe moteur et des axes conducteur et passager, cette liste n'étant pas limitative.

Cette méthode fait qu'il est pratiquement impossible d'utiliser les principaux éléments d'un dispositif d'actionnement conçu pour une version direction à gauche d'un véhicule sur un dispositif d'actionnement adapté à une version direction à droite du même véhicule.

Selon l'invention, les axes de rotation conducteur et passager 31 et 32 du dispositif d'actionnement sont coplanaires, les éléments du dispositif d'actionnement étant adaptés à un véhicule automobile prédéterminé dans lequel la direction est montée sélectivement à droite ou à gauche, ces éléments étant montés suivant une première configuration quand le dispositif est destiné à la version direction à gauche dudit véhicule, les mêmes éléments étant montés suivant une seconde configuration quand le dispositif est destiné à la version direction à droite dudit véhicule.

Le fait de rendre les axes de rotation conducteur et passager 31 et 32 coplanaires permet de standardiser les éléments du dispositif d'actionnement, c'est-à-dire d'utiliser les mêmes éléments pour des dispositifs d'actionnement adaptés aux versions conduite à droite et conduite à gauche d'un même véhicule.

Dans l'invention, un même dispositif peut être adapté aux deux versions du véhicule, les mêmes éléments étant utilisés dans les deux cas, mais étant montés différemment, selon des première ou seconde configurations, suivant que le dispositif est destiné à équiper les versions conduite à droite ou conduite à gauche du véhicule.

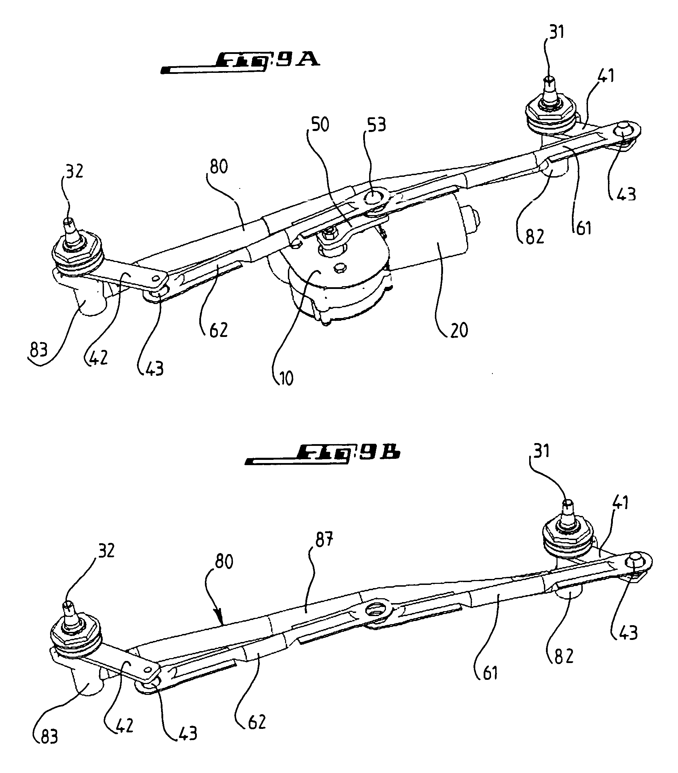

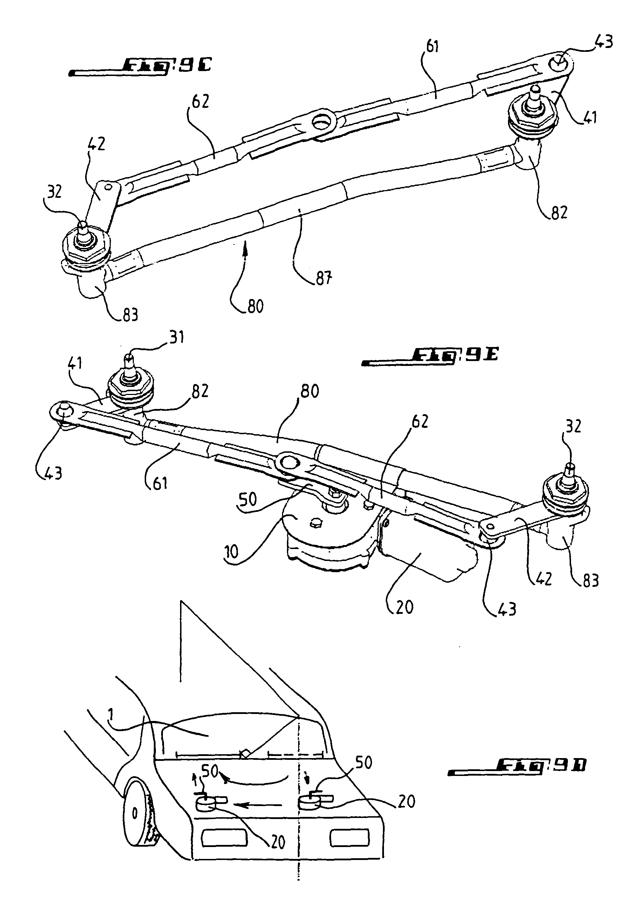

Comme on le voit en comparant les figures 5 et 6, les axes de rotation conducteur et passager 31 et 32 sont disposés respectivement d'un côté gauche de l'élément de structure 10 et d'un côté droit de cet élément dans la première configuration, et respectivement du côté droit de l'élément de structure 10 et du côté gauche de cet élément dans la seconde configuration. La droite et la gauche sont appréciées relativement au sens de déplacement normal du véhicule.

En conséquence, la manivelle conducteur 41 et la bielle conducteur 61 sont également disposées du côté gauche de l'élément de structure 10 dans la première configuration, et du côté droit dans la seconde. Inversement, la manivelle passager 42 et la bielle passager 62 sont disposées du côté droit de l'élément de structure 10 dans la première configuration, et du côté gauche dans la seconde.

Le dispositif d'actionnement comprend une pièce de maintien 80 qui sera définie ci-après, solidaire de l'élément de structure 10 et sur laquelle les axes de rotation conducteur et passager 31 et 32 sont montés.

Cette pièce occupe une première position dans la première configuration, illustrée sur la figure 5, déterminant les positions respectives des axes conducteur et passager 31 et 32 relativement à l'élément de structure 10 dans cette première configuration, en particulier les orientations de ces axes.

La pièce de maintien 80 occupe une seconde position dans la seconde configuration, illustrée sur la figure 6, déterminant les positions respectives des axes conducteur et passager 31 et 32 relativement à l'élément de structure 10 dans cette seconde configuration, en particulier les orientations de ces axes.

La pièce de maintien 80 présente une forme allongée suivant une direction générale longitudinale allant de l'axe conducteur 31 à l'axe passager 32. Cette pièce s'étend dans le plan de symétrie P défini par les axes conducteur 31 et passager 32 dans sa première position représentée sur les figures 5 et 7. Comme on le comprend en comparant les figures 7 et 8, la pièce de maintien 80 passe de sa première à sa deuxième position par rotation autour d'un axe transversal contenu dans le plan de symétrie P et perpendiculaire à la direction longitudinale.

Plus précisément, la pièce de maintien 80 comprend un tube de maintien 81 s'étendant sensiblement longitudinalement, et des paliers conducteur 82 et passager 83 rigidement fixés à deux extrémités longitudinales opposées du tube de maintien 81 dans lesquels sont montés respectivement les axes de rotation conducteur 31 et passager 32.

Le tube de maintien 81 comprend un tronçon de fixation 87 apte à être rigidement fixé sur un même organe de fixation de l'élément de structure 10 à la fois dans la première position et dans la deuxième position de l'organe de maintien 80.

Ce tronçon 87 est constitué d'une portion du tube 81, situé entre les paliers conducteur 82 et passager 83.

Il est plaqué contre une face de la première plaque verticale tournée vers le moteur 20 et fixée rigidement sur cette plaque par des moyens connus en soi.

On comprend donc bien qu'il suffit, pour passer de la première à la seconde position, de retourner la pièce de maintien 80, en la faisant pivoter sur elle-même autour du tronçon de fixation, le palier conducteur 82 passant ainsi du côté gauche de l'élément de structure 10 au côté droit, et inversement le palier passager 83 passant du côté droit au côté gauche.

Les paliers conducteur et passager 82 et 83 comprennent chacun une partie tubulaire 84 dans laquelle respectivement les axes conducteur et passager 31 et 32 sont engagés, et une protubérance cylindrique de fixation 85 solidaire de la partie tubulaire 84 et faisant saillie radialement vers l'extérieur sur le côté de celle-ci. Ces protubérances sont emmanchées à force dans des logements de formes correspondantes à celles des protubérances ménagées aux deux extrémités du tube de maintien 81, de telle sorte que les paliers 82 et 83 sont rigidement fixés sur le tube.

Les axes conducteur et passager 31 et 32 sont fixés en translation dans la partie tubulaire 84 du palier correspondant, mais sont libres en rotation dans cette partie tubulaire.

Les entraîneurs conducteur et passager 71 et 72 sont respectivement solidaires des axes conducteur et passager 31 et 32, et sont liés en translation aux paliers conducteur et passager 82 et 83 par les écrous 86.

Les manivelles conducteur et passager 41 et 42 sont respectivement solidaires des axes conducteur et passager 31 et 32 par des extrémités de liaison respectives. Elles portent chacune un premier ergot 43 sur une extrémité opposée à l'extrémité de liaison, ces ergots présentant chacun une rotule.

Les bielles conducteur et passager 61 et 62 portent des premiers orifices, respectivement 613 et 623, à leurs premières extrémités respectives 611 et 621, les premiers ergots 43 étant engagés dans ces orifices pour former une liaison rotule.

La manivelle moteur 50 est disposée au-dessus de la seconde plaque horizontale. Elle présente une extrémité fixe 51 solidaire de l'axe moteur 21 et une extrémité pivot 52 opposée à l'extrémité fixe 51 portant un second ergot 53 comportant deux rotules superposées. Les secondes extrémités respectives 612 et 622 des bielles conducteur et passager 61 et 62 portent des seconds orifices, respectivement 614 et 624, qui se superposent exactement, une rotule du second ergot 53 étant engagée dans chacune d'entre elles pour former une liaison rotule.

Le dispositif d'actionnement adopte, quand les essuie-vitres ne sont pas en fonctionnement, une position de repos dans laquelle les bielles conducteur et passager 61 et 62 sont alignées suivant une direction transversale.

La manivelle moteur 21 adopte, dans la position de repos du dispositif, une position alignée avec les bielles conducteur et passager 61 et 62, la manivelle s'étendant à partir de l'axe moteur 21 du côté conducteur, à la fois dans la première configuration et dans la seconde configuration.

Le moteur 20 entraîne l'axe moteur 21 dans le même sens de rotation dans les première et seconde configurations. Ce sens de rotation est symbolisé par les flèches F des figures 5 et 6, et correspondant au sens de rotation horaire quand le dispositif d'actionnement est vu de dessus, comme sur les figures 5 et 6.

Enfin, on notera que l'invention vise aussi un véhicule automobile comprenant des essuie-vitres avant conducteur et passager et un dispositif d'actionnement de ces essuie-vitres tel que décrit ci-dessus, la direction du véhicule étant montée sélectivement à droite ou à gauche, les éléments du dispositif d'actionnement étant montés suivant la première configuration et le dispositif étant disposé d'un côté gauche du véhicule dans la version direction à gauche du véhicule, les éléments du dispositif d'actionnement étant montés suivant la seconde configuration et le dispositif étant disposé d'un côté droit du véhicule dans la version direction à droite du véhicule.

Dans la version direction à gauche du véhicule, le dispositif d'actionnement est disposé de façon à ce que l'axe de rotation conducteur 31 soit relativement plus à gauche que l'axe de rotation passager 32, les essuie-vitres conducteur et passager étant inclinés vers la droite à partir de leurs axes de rotation respectifs.

Dans la version direction à droite du véhicule, le dispositif d'actionnement est disposé de façon à ce que l'axe de rotation conducteur 31 soit relativement plus à droite que l'axe de rotation passager 32, les essuie-vitres conducteur et passager étant inclinés vers la gauche à partir de leurs axes de rotation respectifs.

La séquence d'opérations permettant de convertir le dispositif d'actionnement de sa configuration direction à gauche à sa configuration direction à droite est illustrée sur les figures 9A à 9E.

La figure 9A correspond à la configuration de départ, c'est-à-dire direction à gauche.

Sur la figure 9B, l'élément de structure 10, le moteur 20 et la manivelle moteur 50 ont été retirés.

On obtient la situation de la figure 9C en disposant les manivelles conducteur 41 et passager 42 et les bielles conducteur 61 et passager 62 dans des positions symétriques de celles de la figure 9B par rapport au plan P défini par les axes conducteur 31 et passager 32.

Puis, on fait pivoter l'ensemble constitué par la pièce de maintien 80, les manivelles conducteur 41 et passager 42 et les bielles conducteur 61 et passager 62, et les axes conducteur 31 et passager 32, de 180° autour d'un axe sensiblement perpendiculaire au tube 81 et contenu dans le plan de symétrie P, puis on translate cet ensemble du côté droit au côté gauche du véhicule. Au total, comme le montre la figure 9D, ces mouvements de rotation et de translation combinés correspondent sensiblement à un mouvement de rotation à 180° autour d'un axe perpendiculaire au pare-brise et contenu dans le plan longitudinal médian du véhicule.

Enfin, on translate simplement l'élément de structure 10, le moteur 20 et la manivelle moteur 50 du côté gauche au côté droit du véhicule, on pivote la manivelle moteur 50 du côté opposé, et on remonte les différents éléments du dispositif pour obtenir la configuration finale de la figure 9E, c'est-à-dire la configuration direction à droite.

Il est important de souligner que les bielles conducteur et passager et les manivelles conducteur et passager peuvent prendre d'autres formes que celles décrites ci-dessus sans sortir du cadre de l'invention.

On comprend bien les avantages que procure le dispositif d'actionnement de l'invention.

Un même dispositif d'actionnement peut être adapté à la version direction à gauche du véhicule ou à la version direction à droite du même véhicule. Ce dispositif comprend un jeu d'éléments unique, agencés suivant deux configurations différentes adaptées aux deux versions du véhicule.

Le nombre de pièces détachées à gérer est donc réduit par comparaison avec l'art antérieur.

De plus, le prix de revient des dispositifs adaptés à la version conduite à droite est considérablement réduit. En effet, les dispositifs de l'art antérieur utilisent des pièces produites en petite série car les pays dans lesquels on roule à gauche de la chaussée sont peu nombreux. L'invention permet d'utiliser des pièces produites en grande série, car communes aux versions conduite à droite et conduite à gauche. Seule l'étape finale de montage est spécifique aux conduites à droite ou à gauche.

Par ailleurs, il n'y a qu'un seul dispositif d'actionnement à concevoir, alors que dans l'art antérieur deux dispositifs distincts devaient être conçus, ce qui permet un gain de temps et une réduction des coûts pendant la phase de conception du véhicule.

Enfin, la conversion du dispositif de sa configuration adaptée à la version direction à droite à sa configuration adaptée à la version direction à gauche est effectuée suivant une séquence très simple, qui a été décrite plus haut.

## Revendications

1. Dispositif d'actionnement d'essuie-vitres avant conducteur et passager de véhicule automobile, ce dispositif comprenant un élément de structure (10), un moteur (20) solidaire de l'élément de structure (10) entraînant en rotation un axe moteur (21), des axes de rotation conducteur et passager (31, 32), des manivelles conducteur et passager (41, 42) montées libres en rotation relativement à l'élément de structure (10) respectivement par les axes de rotation conducteur et passager (31, 32) et entraînant respectivement les essuie-vitres conducteur et passager en rotation autour des axes de rotation conducteur et passager (31, 32), une manivelle moteur (50) entraînée en rotation par l'axe moteur (21), et des bielles conducteur et passager (61, 62) montées pivotantes par des premières extrémités respectivement sur les manivelles conducteur et passager (41, 42) et par des secondes extrémités respectives opposées aux premières sur la manivelle moteur (50), **caractérisé en ce que** les éléments du dispositif d'actionnement sont adaptés à un véhicule automobile prédéterminé dans lequel la direction est montée sélectivement à droite ou à gauche, ces éléments étant montés suivant une première configuration quand le dispositif est destiné à la version direction à gauche dudit véhicule, les mêmes éléments étant montés suivant une seconde configuration quand le dispositif est destiné à la version direction à droite dudit véhicule.

2. Dispositif selon la revendication 1, **caractérisé en ce que** les axes de rotation conducteur et passager (31, 32) sont coplanaires.

3. Dispositif selon la revendication 2, **caractérisé en ce qu'**il comprend une pièce de maintien (80) solidaire de l'élément de structure (10) et sur laquelle les axes de rotation conducteur et passager (31, 32) sont montés, cette pièce occupant une première position dans la première configuration déterminant les positions respectives des axes conducteur et passager (31, 32) relativement à l'élément de structure (10) dans cette première configuration, la pièce occupant une seconde position dans la seconde configuration déterminant les positions respectives des axes conducteur et passager (31, 32) relativement à l'élément de structure (10) dans cette seconde configuration.

4. Dispositif selon la revendication 3, **caractérisé en ce que** la pièce de maintien (80) présente une forme allongée suivant une direction générale longitudinale allant de l'axe conducteur (31) à l'axe passager (32), cette pièce s'étendant dans le plan de symétrie (P) défini par les axes conducteur et passager (31, 32) dans sa première position, et passant de sa première à sa deuxième position par rotation autour d'un axe transversal contenu dans le plan de symétrie (P) et perpendiculaire à la direction longitudinale.

5. Dispositif selon la revendication 4, **caractérisé en ce que** la pièce de maintien (80) comprend un tube de maintien (81) s'étendant sensiblement longitudinalement, et des paliers conducteur et passager (82, 83) rigidement fixés à deux extrémités opposées du tube de maintien (81) dans lesquels sont montés respectivement les axes de rotation conducteur et passager (31, 32).

6. Dispositif selon la revendication 5, **caractérisé en ce que** le tube de maintien (81) comprend un tronçon de fixation (87) apte à être rigidement fixé sur un même organe de fixation de l'élément de structure (10) à la fois dans la première position et dans la deuxième position de l'organe de maintien (80).

7. Dispositif selon l'une quelconque des revendications 2 à 6, **caractérisé en ce que** la manivelle moteur (50) présente une extrémité fixe (51) solidaire de l'axe moteur (21) et une extrémité pivot (52) opposée à l'extrémité fixe (51) sur laquelle sont montées les bielles conducteur et passager (61, 62).

8. Dispositif selon l'une quelconque des revendications 2 à 7, **caractérisé en ce qu'**il adopte, quand les essuie-vitres ne sont pas en fonctionnement, une position de repos dans laquelle les bielles conducteur et passager (61, 62) sont alignées.

9. Dispositif selon la revendication 8, **caractérisé en ce que** la manivelle moteur (50) adopte, dans la position de repos du dispositif, une position alignée avec les bielles conducteur et passager (61, 62), la manivelle s'étendant à partir de l'axe moteur (21) du côté du conducteur dans les première et seconde configurations.

10. Véhicule automobile comprenant des essuie-vitres avant conducteur et passager et un dispositif d'actionnement de ces essuie-vitres selon l'une quelconque des revendications précédentes, la direction du véhicule étant montée sélectivement à droite ou à gauche, les éléments du dispositif d'actionnement étant montés suivant la première configuration et le dispositif étant disposé d'un côté gauche du véhicule dans la version direction à gauche du véhicule, les éléments du dispositif d'actionnement étant montés suivant la seconde configuration et le dispositif étant disposé d'un côté droit du véhicule dans la version direction à droite du véhicule.
